# EUROPÄISCHE PATENTSCHRIFT

(11) **EP 1 570 241 B1**
(45) Veröffentlichungstag und Bekanntmachung des Hinweises auf die Patenterteilung: **29.06.2016**
(21) Anmeldenummer: 03767719.2
(22) Anmeldetag: 02.12.2003
(51) Int. Cl.: G01F 13/00

(54) **VERFAHREN ZUM ABFÜLLEN EINER DEFINIERTEN MENGE EINES MEDIUMS IN EINEN BEHÄLTER**
METHOD FOR FILLING A DEFINED QUANTITY OF A MEDIUM INTO A CONTAINER
PROCEDE POUR TRANSVASER UNE QUANTITE DEFINIE D'UN MILIEU DANS UN RECIPIENT

(30) Priorität: 09.12.2002 DE 10257593
(43) Veröffentlichungstag der Anmeldung: 07.09.2005
(73) Patentinhaber: Endress + Hauser Flowtec AG, 4153 Reinach BL 1 (CH)
(72) Erfinder: BREITHAUPT, Hartmut, 74523 Schwäbisch-Hall (DE)
(74) Vertreter: Andres, Angelika Maria
(86) Internationale Anmeldenummer: PCT/EP2003/013540
(87) Internationale Veröffentlichungsnummer: WO 2004/053432

(56) Entgegenhaltungen:
- DE-A- 19 701 001
- DE-A- 19 834 900
- US-A- 4 401 141
- US-A- 5 515 888
- US-A1- 2002 014 496

## Beschreibung

Die Erfindung betrifft ein Verfahren zum Abfüllen einer definierten Menge eines Mediums in einem Behälter gemäß dem Oberbegriff des Anspruchs 1.

In vielen Bereichen der Lebensmittel- oder Pharmaindustrie werden Abfüllanlagen eingesetzt, um eine definierte Menge eines Mediums in ein Behältnis abzufüllen. Eine wesentliche Anforderung bei diesen Abfüllanlagen ist eine gleichbleibende Abfüllmenge bei immer kürzer werdenden Abfüllzeiten.

So werden bei Getränkeabfüllanlagen teilweise bis zu 65 000 Flaschen pro Stunde abgefüllt. Eine weitere wichtige Anforderung bei diesen Abfüllanlagen ist die Genauigkeit und Reproduzierbarkeit der Einzelabfüllung. Jede Überfüllung bedeutet ein finanzieller Verlust für den Anlagebetreiber.

Um die Reproduzierbarkeit der abgefüllten Menge des Mediums sicherzustellen, wird bei den bekannten Abfüllanlagen zu einem gegebenen Zeitpunkt ein Dosierventil in einer Zuführleitung geöffnet und zu einem genau bestimmten Zeitpunkt wieder geschlossen.
Der Volumen- bzw. der Massedurchfluss des Mediums wird mit einem Volumendurchflussmessgerät bzw. mit einem Massedurchflussmessgerät bestimmt. Bei dem Volumendurchflussmessgerät kann es sich beispielsweise um einen "Promag 53" bzw. einem "Dosimag 2".
Als Massedurchflussmessgerät kann beispielsweise ein "Promass 83" bzw. ein Dosimass 2" eingesetzt werden. Beide zuvor genannten Gerätetypen werden von der Firma Endress + Hauser angeboten und vertrieben. Anhand des von dem Messgerät gelieferten Durchflusswertes wird die Abfüllmenge bestimmt. Sobald die vorbestimmte Menge des Mediums in das Behältnis eingefüllt ist, wird das Dosierventil geschlossen. Die Vorlaufmenge bzw. die Nachlaufmenge, d. h. die Abfüllmenge die bei nicht vollständig geöffneter bzw. geschlossenem Dosierventil in das Behältnis eingefüllt wird, wird anhand von Erfahrungswerten bzw. anhand von expermentiell ermittelten Werten bestimmt und bei dem Abfüllvorgang berücksichtigt.
Eine konstante Abfüllmenge kann nur dann erreicht werden, wenn der Druck in der Zuführleitung im wesentlichen konstant bleibt. Heutzutage wird dies dadurch erreicht, dass ein sogenannter Pufferbehälter vorgesehen ist, aus dem die entsprechende Menge des abzufüllenden Mediums entnommen wird. Die Größe des Pufferbehälters ist so bemessen, dass die Menge des Mediums einer Einzelabfüllung die Füllhöhe im Pufferbehälter nicht merklich verändert.

Um die Füllhöhe im Pufferbehälter im wesentlichen konstant zu halten, ist eine Zuführpumpe vorgesehen, die das Medium in den Pufferbehälter fördert.

Derartige Pufferbehälter besitzen eine Reihe von Nachteilen. Sie sind zum einen teuer, müssen gereinigt werden und benötigen einen erheblichen Platzbedarf.

In der Offenlegungsschrift DE 197 01 001 A1 ist ein Verfahren zum Dosieren von Flüssigkeitsmengen mit einem Dosierventil angegeben. Das Dosierventil wird zum Sperren der Abgabeleitung aktiviert, wenn die während eines Dosiervorgangs gmessene Flüssigkeitsmenge einen Wert erreicht hat, der zusammen mit der aufgrund der endlichen Ventilschließzeit anfallenden Nachlaufmenge den Wert der zu dosierenden Flüssigkeitsmenge erreicht.

Die Patentschrift US 2002/00144 96 A1 beschreibt eine Dispensierungsmaschine zum akkuraten Mischen und anschließendem Dispensieren von Flüssigkeiten oder Feststoffen auf Substraten. Dabei wird das definierte Dispensieren durch speziell angesteuerte Ventile erreicht.

Aufgabe der Erfindung ist es ein Verfahren zum Abfüllen einer definierten Menge eines Mediums in ein Behältnis anzugeben, das keinen bzw. einen erheblich kleineren Pufferbehälter als herkömmliche Abfüllanlagen benötigen.

Gelöst wird diese Aufgabe durch das in Anspruch 1 angegebene Verfahren.

Die wesentliche Idee der Erfindung besteht darin, den Druck in der Zufüllleitung im wesentlichen dadurch konstant zu halten, dass die Förderstellung der Zuführpumpe erfasst wird und das Abschaltsignal für die Zuführpumpe und das Schließsignal für das Dosierventil entsprechend aufeinander abgestimmt werden, so dass der Druck in der Zuführleitung im wesentlichen konstant bleibt.

Vorteilhafte Weiterentwicklungen der Erfindung sind in den Unteransprüchen angegeben.

Nachfolgend ist die Erfindung anhand eines in der Zeichnung dargestellten Ausführungsbeispiels näher erläutert.

Es zeigen:
- Fig. 1: schematische Darstellung einer Abfüllanlage die zur Durchführung des erfindungsgemäßen Verfahrens geeignet ist;
- Fig. 2: typischer Verlauf einer Füllkurve bei einem Abfüllvorgang in einer Abfüllanlage;
- Fig. 3: Signal zur Erfassung der Förderstellung einer Zuführpumpe;
- Fig. 4: schematische Darstellung einer Abfüllanlage gemäß Fig. 1 mit mehreren Abfüllstationen

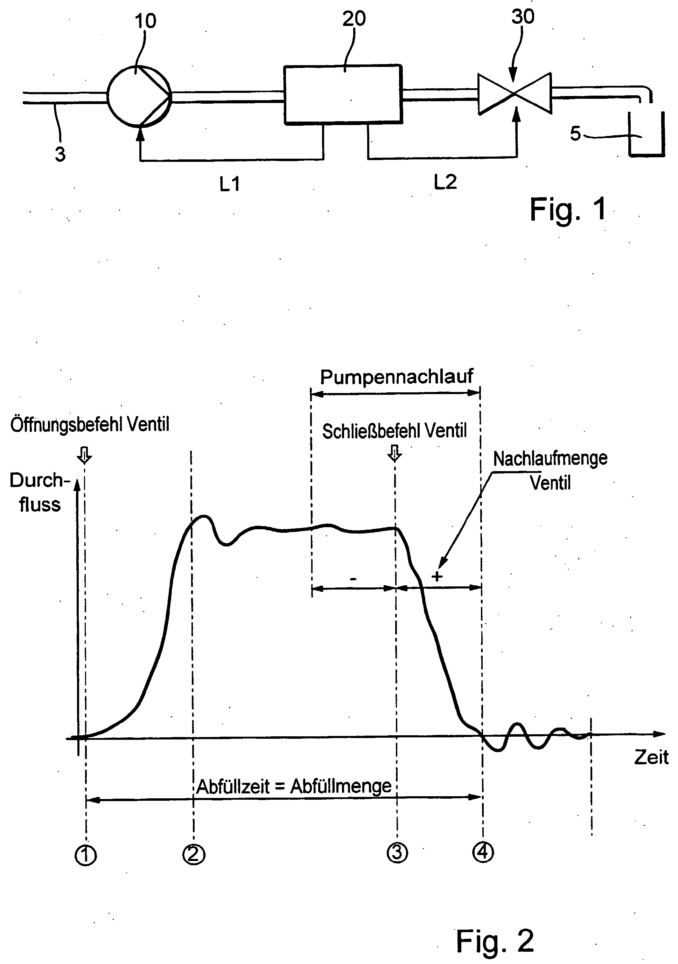

Fig. 1 zeigt eine schematische Darstellung einer Abfüllanlage, die zur Durchführung des erfindungsgemäßen Verfahrens geeignet ist. Das Medium wird über die Zuführleitung 3 zum Behältnis 5 geführt. Die Zuführpumpe 10 fördert das Medium in die Zuführleitung 3 von einem nicht näher dargestellten Anlageteil.

Mit Hilfe des Durchflussmessgeräts 20 wird der Durchfluss in der Zuführleitung 3 bestimmt. Als Volumendurchflussgeräte können beispielsweise ein "Promag 53" bzw. einem "Dosimag 2" eingesetzt werden.
Als Massedurchflussmessgeräte können beispielsweise ein "Promass 83" bzw. ein Dosimass 2" zum Einsatz kommen. Diese beiden Gerätetypen werden bereits an vorhergehender Stelle beschrieben, von der Firma Endress + Hauser angeboten und vertrieben. Die vom Durchflussmessgerät 20 ermittelte Durchflussmenge dient zur Dosierung der Abfüllmenge. Sobald die vorbestimmte Menge des Mediums in das Behältnis 5 eingefüllt ist, wird das Dosierventil 30 geschlossen.

Um eine definierte Abfüllmenge in das Behältnis 5 sicherzustellen, kommt eine Füllmengenregelung zum Einsatz, die als Software-Programm in einem Mikroprozessor des Durchflussmessers 20 ausgeführt wird. Die notwendigen Steuerbefehle werden über die Steuerleitungen L1, L2 an das Dosierventil 30 bzw. die Zuführpumpe 10 weitergegeben.
Durch Öffnen des Dosierventils 30 wird der Abfüllvorgang eingeleitet. Sobald die gewünschte Menge des Mediums in das Behältnis 5 eingefüllt wird, wird der Abfüllvorgang durch Schließen des Dosierventils 30 beendet.

In Fig. 2 ist eine schematische Darstellung einer typischen Abfüllkurve zu sehen. Aufgetragen ist die Durchflussmenge in Abhängigkeit von der Zeit. Die in der Zeichnung dargestellten Ziffern kennzeichnen die Zeitpunkte für die folgenden Verfahrensschritte, 1 Befehl Dosierventil öffnen, 2 Dosierventil ist geöffnet, 3 Dosierventil schließen, 4 Dosierventil ist geschlossen. Die in das Behältnis 5 abgefüllte Menge entspricht der Fläche unter der Kurve zwischen den Zeitpunkten 1 und 4. Ändert sich der Druck in der Zuführleitung 3, so ändert sich die Kurve dahingehend, dass der etwa waagrechte Kurvenverlauf zwischen den Zeitpunkten 2 und 3 entweder nach oben bzw. nach unten verschoben wird und dadurch sich die Abfüllmenge ändern würde.

Der Einfluss der Zuführpumpe 10 auf den Abfüllvorgang ist nachfolgend näher beschrieben. Die Zuführpumpe 10 muss so angesteuert werden, dass die waagrechte Linie zwischen den Zeitpunkten 2 und 3 im Abfülldiagramm für alle Abfüllvorgänge in etwa die gleiche Höhe aufweist. Dies wird dadurch erreicht, dass das Abschaltsignal für die Zuführpumpe 10 und das Schließsignal für das Dosierventil aufeinander abgestimmt sind. Fördert die Zuführpumpe 10 bei geschlossenem Dosierventil 30, so käme es zu einem Druckaufbau in der Zuführleitung 3, der beim nächsten Öffnen des Dosierventils 30 ein Schließen des Mediums verursachen würde. Ein derartiges Schließen ist mit den bekannten Durchflussmessgeräten sehr schwer zu erfassen. Der vom Durchflussmessgerät 20 gelieferte Messwerte unterläge erheblichen Ungenauigkeiten und dadurch käme auch der Schließbefehl für das Dosierventil 30 nicht zum richtigen Zeitpunkt.
Dies würde sich insgesamt nachteilig auf Genauigkeit der Abfüllmenge auswirken.

Erfindungsgemäß wird die Förderstellung der Zuführpumpe erfasst und Abschaltsignal für die Zuführpumpe und Schließbefehl für das Dosierventil 30 so aufeinander abgestimmt, dass der Druck in der Zuführleitung im wesentlichen konstant bleibt. Wichtig hierbei ist, dass der Pumpennachlauf, d. h. die zeitliche Verzögerung zwischen Abschaltsignal für die Zuführpumpe und Pumpenstillstand mit berücksichtigt wird.

Erfindungsgemäß wird deshalb die Kammerstellung der Zuführpumpe 10 erfasst und Abschaltsignal für die Zuführpumpe 10 und Schließbefehl für das Dosierventil 30 entsprechend aufeinander abgestimmt. Dadurch wird gewährleistet, dass nach dem Schließen des Dosierventils 30 kein zusätzlicher Druckaufbau in der Zuführleitung 3 erfolgt. Dadurch, dass der Druck in der Zuführleitung im wesentlichen konstant gehalten werden kann, ist ein Zwischenspeichern des Mediums in einem Pufferbehälter nicht mehr notwendig. Um die Förderstellung der Zuführpumpe zu erfassen, sind entsprechende Sensoren an der Zuführpumpe vorgesehen.

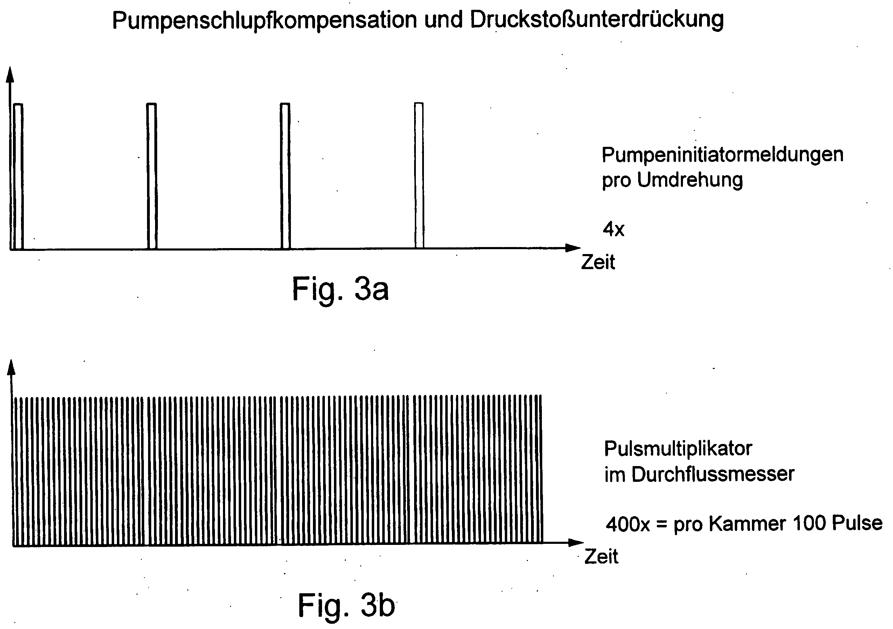

In Fig. 3 a ist der zugehörige Signalverlauf dargestellt. Pro Umdrehung der Pumpe werden 4 Pulse erzeugt. Um eine sehr genaue Information über die Förderstellung der Pumpe zu erhalten, wird dieses Signal (gemäß Fig. 3a) mit entsprechenden Pulsmultiplikatoren (z. B. x 100) vervielfältigt, so dass zu jedem Zeitpunkt die Förderstellung der Zuführpumpe 10 genau bestimmt werden kann (Fig. 3b).

Als sehr vorteilhaft hat es sich erwiesen, dass der Pumpennachlauf genau der Nachlaufmenge des Dosierventils 30 entspricht.

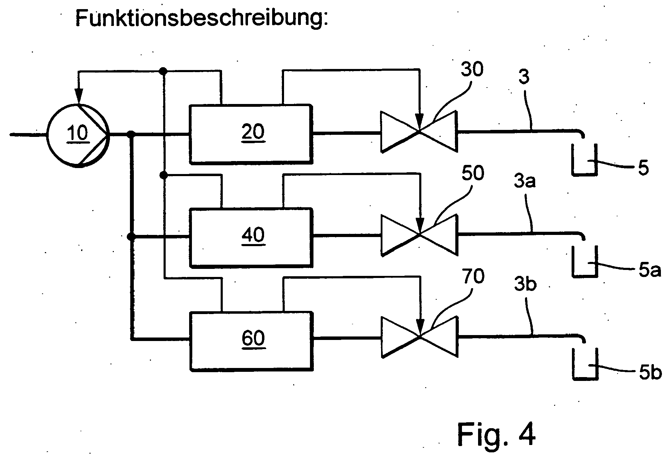

In Fig. 4 ist eine Abfüllanlage dargestellt, bei der die Zuführpumpe 10 mehrere Abfüllstationen bedient. Jede Abfüllstation weist einen Durchflussmesser 20, 40, 60 und ein Dosierventil 30, 50, 70 für jeweils ein Behältnis 5, 5a, 5b auf. Die Abfüllstation, die als letzte den Schliessbefehl für ihr Dosierventil erhält, steuert das Abschalten der Zuführpumpe 10, d.h. sie übernimmt die Masterfunktion. Beispielhaft ist eine Abfüllanlage mit drei Abfüllstationen gezeigt. Im Prinzip können auch mehr als drei Abfüllstationen parallel geschaltet werden.

## Patentansprüche

1. Verfahren zum Abfüllen einer definierten Menge eines Mediums in einen Behälter mit einer Zuführpumpe (10), die über einen Durchflussmesser (20) mit einem Dosierventil (30) verbunden ist, wobei die Abfüllmenge durch Öffnen und Schließen des Dosierventils (30) geregelt wird, wobei die Abfüllmenge mit dem Durchflussmesser (20) gemessen und die Abfüllmenge durch Öffnen und Schließen des Dosierventils (30) geregelt wird, wobei zur Erfassung der Förderstellung der Zuführpumpe 10 zumindest ein Sensor an der Zuführpumpe 10 vorgesehen ist, und wobei das zugehörige Signal mit zumindest einem Pulsmultiplikator vervielfältigt wird,
und wobei das Abschaltsignal für die Zuführpumpe (10) und das Schließsignal für das Dosierventil (30) so bestimmt sind, so dass beim Schließen des Dosierventils (30) der Druck in einer zwischen Zuführpumpe (10) und Dosierventile (30) angeordneten Leitungsabschnitt der Zuführleitung (3) in etwa konstant gehalten wird wobei die zeitliche Verzögerung zwischen dem Abschaltsignal für die Zuführpumpe und dem Pumpenstillstand mit berücksichtigt wird.

2. Verfahren nach Anspruch 1, **dadurch gekennzeichnet, dass** zwischen Zuführpumpe (10) und Dosierventil (30) ein Pufferbehälter angeordnet ist.

3. Verfahren nach einer der vorhergehenden Ansprüche, **dadurch gekennzeichnet, dass** die Förderstellung der Zuführpumpe (10) mit Hilfe eines oder mehreren Sensoren erfasst wird.

4. Verfahren nach einem der vorhergehenden Ansprüche, **dadurch gekennzeichnet, dass** die Fördermenge der Zuführpumpe (10) nach dem Abschaltsignal der Nachlaufmenge des Ventils (30) entspricht.

## Claims

1. Procedure for filling a defined volume of a medium into a vessel with a feed pump (10), which is connected to a dosing valve (30) via a flowmeter (20), wherein the fill quantity is regulated by opening and closing the dosing valve (30), wherein the fill volume is measured with the flowmeter (20) and the fill volume is regulated by opening and closing the dosing valve (30), wherein at least one sensor is provided on the feed pump (10) to record the conveyance position of the feed pump (10), and wherein the associated signal is reproduced with at least one pulse multiplier, and wherein the switch-off signal for the feed pump (10) and the closing signal for the dosing valve (30) are such that the pressure in a section of the supply line (3) arranged between the feed pump (10) and dosing valves (30) is kept essentially constant when the dosing valve (30) is closed, wherein the time delay between the switch-off signal for the feed pump and pump standstill is also taken into consideration.

2. Procedure as claimed in Claim 1, **characterized in that** a buffer vessel is arranged between the feed pump (10) and the dosing valve (30).

3. Procedure as claimed in one of the previous claims, **characterized in that** the conveyance position of the feed pump (10) is detected using one or more sensors.

4. Procedure as claimed in one of the previous claims, **characterized in that** the supply volume of the feed pump (10) after the switch-off signal corresponds to the drip quantity of the valve (30).

## Revendications

1. Procédé destiné au remplissage d'une quantité définie d'un produit dans un réservoir avec une pompe d'alimentation (10), qui est reliée à une vanne de dosage (30) par l'intermédiaire d'un débitmètre (20), la quantité de remplissage étant régulée par l'ouverture et la fermeture de la vanne de dosage (30), la quantité de remplissage étant mesurée avec le débitmètre (20) et la quantité de remplissage étant régulée par l'ouverture et la fermeture de la vanne de dosage (30), au moins un capteur étant prévu sur la pompe d'alimentation (10) pour détecter la position de refoulement de la pompe d'alimentation (10), et le signal correspondant étant reproduit au moyen d'un multiplicateur d'impulsions,
et pour lequel le signal de coupure pour la pompe d'alimentation (10) et le signal de fermeture pour la vanne de dosage (30) sont définis de telle manière à maintenir à peu constante la pression dans une section de conduite disposée entre la pompe d'alimentation (10) et la vanne de dosage (30), le décalage de temps entre le signal de coupure pour la pompe d'alimentation et l'arrêt de la pompe étant pris en compte.

2. Procédé selon la revendication 1, **caractérisé en ce qu'**est disposé un réservoir tampon entre la pompe d'alimentation (10) et la vanne de dosage (30).

3. Procédé selon l'une des revendications précédentes, **caractérisé en ce que** la position de refoulement de la pompe d'alimentation (10) est détectée à l'aide d'un ou de plusieurs capteurs.

4. Procédé selon l'une des revendications précédentes, **caractérisé en ce que** le débit de refoulement de la pompe d'alimentation (10) correspond, après le signal de coupure, à la queue de chute de la vanne (30).
